# EUROPEAN PATENT SPECIFICATION

(11) **EP 3 816 220 B1**
(45) Date of publication and mention of the grant of the patent: **25.01.2023**
(21) Application number: 19826088.7
(22) Date of filing: 27.06.2019
(51) Int. Cl.: C08L 9/00, B60C 1/00, C08K 3/36, C08L 7/00, C08L 71/02, C08L 9/06

(54) **RUBBER COMPOSITION**
KAUTSCHUKZUSAMMENSETZUNG
COMPOSITION DE CAOUTCHOUC

(30) Priority: 28.06.2018 JP 2018122908
(43) Date of publication of application: 05.05.2021
(73) Proprietor: The Yokohama Rubber Co., Ltd., Tokyo 105-8685 (JP); ADEKA CORPORATION, Arakawa-ku Tokyo 116-8554 (JP)
(72) Inventor: KAZARIYA, Ayaki, Hiratsuka City, Kanagawa 2548601 (JP); ASHIURA, Makoto, Hiratsuka City, Kanagawa 2548601 (JP); SENGOKU, Tadashi, Tokyo 116-8554 (JP); FUJIMOTO, Ryusaku, Tokyo 116-8554 (JP)
(74) Representative: Dilg, Haeusler, Schindelmann Patentanwaltsgesellschaft mbH
(86) International application number: PCT/JP2019/025642
(87) International publication number: WO 2020/004560

(56) References cited:
- EP-A1- 2 995 644
- WO-A1-2018/001772
- JP-A- 2013 159 740
- JP-A- 2015 000 971
- JP-A- 2017 190 412
- US-A1- 2016 130 426
- US-A1- 2016 177 072
- DATABASE WPI Week 201645 Thomson Scientific, London, GB; AN 2016-38827A XP002804504, -& JP 2016 113590 A (SUMITOMO RUBBER IND LTD) 23 June 2016 (2016-06-23)

## Description

### Technical Field

The present invention is related to a rubber composition for a tire.

### Background Art

In recent years, there has been a demand to reduce tire rolling resistance from the perspective of fuel economy of a vehicle. To meet such a demand, methods of reducing rolling resistance of a tire and improving fuel economy of the tire by blending silica in a rubber component constituting the tire to reduce hysteresis loss (tan δ) have been known.

However, silica has low affinity with rubber components, and the cohesiveness between silica is high, so even when silica is simply blended in the rubber component, the silica is not dispersed, which leads to the problem that the effect of reducing the rolling resistance cannot be sufficiently achieved.

In such circumstances, for example, Patent Document 1 describes a technology to maintain or enhance, for example, fuel economy by blending a Pluronic non-ionic surfactant in a rubber composition for a tire.

Patent Document 1 describes a non-ionic surfactant represented by Formula (I) below (in Formula (I), a, b, and c each represent an integer) as the Pluronic non-ionic surfactant.

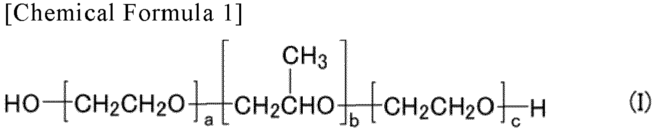

### Citation List

### Patent Literature

Patent Document 1: JP 2015-000971 A

### Summary of Invention

### Technical Problem

Meanwhile, when the inventors of the present invention studied a rubber composition for a tire, the rubber composition containing the Pluronic non-ionic surfactant based on Patent Document 1, it has been found that such a composition does not necessarily achieve adequate fuel economy performance when formed into a tire. Furthermore, it was found that further improvement for processability of the composition is required (Comparative Example 1).

Furthermore, in a case where a non-ionic surfactant is used, it was found that further improvement for tensile strength at break of the resulting cured product is also required (Comparative Examples 2 to 6).

Thus, in light of the circumstances described above, an object of the present invention is to provide a rubber composition having excellent processability, excellent tensile strength at break of a resulting cured product, and excellent fuel economy performance when formed into a tire.

### [Solution to Problem]

As a result of diligent research on the problems described above, the inventors of the present invention have found that the problems described above can be solved by blending a specific non-ionic surfactant in a rubber composition containing a diene rubber and silica, and thus have completed the present invention.

In other words, the present inventors have found that the above-described problems can be solved by the following configurations.
[1] A rubber composition for a tire, the rubber composition containing a diene rubber, silica, and a non-ionic surfactant represented by Formula (1) below,
   a content of the silica being from 50 to 200 parts by mass per 100 parts by mass of the diene rubber, and
   a content of the non-ionic surfactant being from 0.1 to 15 mass% with respect to the content of the silica. 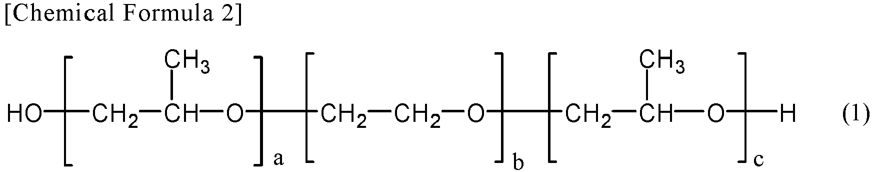 In Formula (1), b is from 5 to 45, and a + c is from 55 to 95.
[2] The rubber composition for a tire according to [1], where a CTAB adsorption specific surface area of the silica is from 115 to 300 m²/g.

### Advantageous Effects of Invention

As described below, according to embodiments of the present invention, a rubber composition having excellent processability, excellent tensile strength at break of a resulting cured product, and excellent fuel economy performance when formed into a tire can be provided.

### Brief Description of Drawings

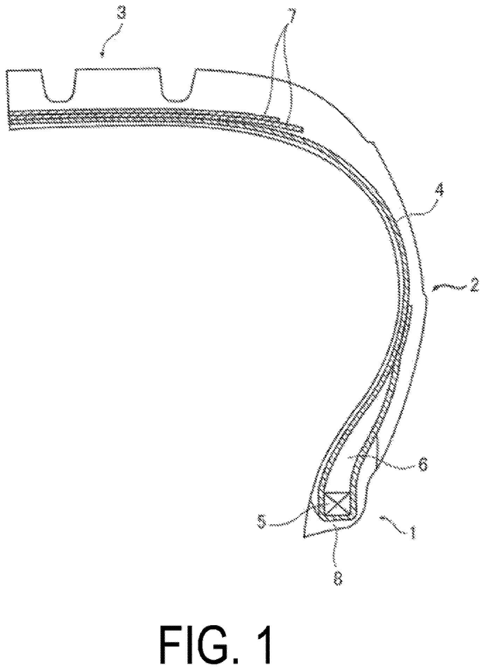

FIG. 1 is a partial cross-sectional schematic view that represents a tire according to an embodiment of the present invention.

### Description of Embodiments

The rubber composition according to an embodiment of the present invention will be described below.

Note that in the present specification, a value range indicated by using "from... to..." means the range including the former value as a lower limit value and the latter value as an upper limit value.

In the present specification, the production method of each of the components is not particularly limited. Examples of the method include a known method.

In the present specification, unless otherwise indicated, a substance corresponding to each component can be used alone or in combination of two or more types thereof. In a case where a component includes two or more types of substances, content of component means the total content of the two or more types of substances.

In the present specification, a case where at least one of processability, tensile strength at break, or fuel economy performance is superior may be referred to as exhibiting superior effect of the present invention.

### Rubber composition for a tire

The rubber composition for a tire according to an embodiment of the present invention (hereinafter, also referred to as "composition according to an embodiment of the present invention") contains a diene rubber, silica, and a non-ionic surfactant represented by Formula (1) below. The content of the silica is from 50 to 200 parts by mass per 100 parts by mass of the diene rubber. The content of the non-ionic surfactant is from 0.1 to 15 mass% with respect to the content of the silica.

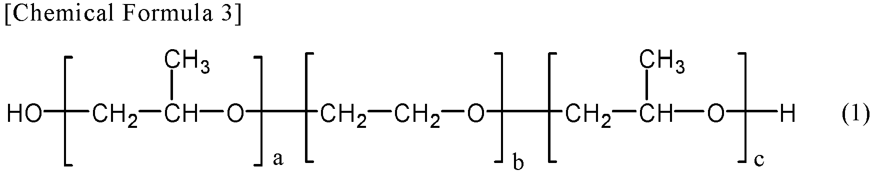

In Formula (1), b is from 5 to 45, and a + c is from 55 to 95.

It is thought that the composition according to an embodiment of the present invention can achieve the effects described above because of having such a configuration. Although the reason is not clear, it is presumed as follows.

The composition according to an embodiment of the present invention contains a compound represented by Formula (1) above ((poly)oxypropylene-polyoxyethylene-(poly)oxypropylene block copolymer having a hydroxy group on each of both terminals) as the non-ionic surfactant. The non-ionic surfactant has, as a main chain, a block B in which a repeating unit is an oxyethylene group and the number of the repeating unit is b at center, blocks A in which a repeating unit is an oxypropylene group and the number of the repeating units is a at both sides of the block B, and a block C in which a repeating unit is an oxypropylene group and the number of the repeating unit is c.

In the compound represented by Formula (1) above, the block A and C are considered to have superior affinity with a diene rubber compared to that of the block B.

Furthermore, because the blocks A to C are formed from an oxyalkylene group, each of them can interact with a hydroxy group on a silica surface; however, it is conceived that the block B tends to exhibit greater affinity for silica due to small steric hindrance of the repeating unit compared to cases of the blocks A and C. Therefore, it is conceived that the block B contributes more to suppression of aggregation of silica in the compound represented by Formula (1) compared to the blocks A and C.

For the reasons described above, in the composition according to an embodiment of the present invention, it is conceived that the composition according to an embodiment of the present invention exhibits excellent processability because the block B is introduced into the diene rubber as the block A and/or the block C tend to tangle with the diene rubber, the block B or the like interacts with a hydroxy group of the silica surface, and thus dispersibility of silica in the diene rubber becomes significantly high. Furthermore, it is conceived that the dispersibility of the silica becomes significantly high also in a tire obtained by the composition according to an embodiment of the present invention, and the effect of reducing hysteresis loss due to silica can be adequately exhibited.

Note that, in a case where a non-ionic surfactant represented by Formula (I) described in Patent Document 1 is used in place of the non-ionic surfactant, it is conceived that the non-ionic surfactant represented by Formula (I) is less likely to exhibit affinity with the diene rubber due to the blocks formed from oxyethylene groups at the both terminals, and thus the effects described above are not adequately exhibited.

However, the above-mentioned mechanism is an inference, the mechanism still falls within the scope of the present invention even if it differs from that described above.

Each of components in the composition according to an embodiment of the present invention will be described in detail below.

### Diene rubber

The diene rubber contained in the composition according to an embodiment of the present invention is not particularly limited, and specific examples thereof include natural rubber (NR), isoprene rubber (IR), butadiene rubber (BR), aromatic vinyl-conjugated diene copolymer rubber, acrylonitrile-butadiene copolymer rubber (NBR), butyl rubber (IIR), halogenated butyl rubber (Br-IIR, Cl-IIR), and chloroprene rubber (CR).

As the diene rubber, from the perspective of achieving excellent rigidity of a resulting tire, use of aromatic vinyl-conjugated diene copolymer rubber is preferred, and a combined use of aromatic vinyl-conjugated diene copolymer and butadiene rubber (BR) is more preferred.

### Aromatic vinyl-conjugated diene copolymer rubber

Examples of the aromatic vinyl-conjugated diene copolymer rubber include styrene-butadiene rubber (SBR) and styrene-isoprene copolymer rubber. Among the aromatic vinyl-conjugated diene copolymer rubbers, in particular, from the perspective of achieving excellent rigidity of a resulting tire, styrene-butadiene rubber (SBR) is preferred.

### • Modification group

The aromatic vinyl-conjugated diene copolymer rubber may contain a modification group (the same applies hereinafter).

Examples of the modification group include a hydroxy group, hydrocarbyloxysilane groups such as alkoxysilyl groups, a silanol group, a carboxy group, an aldehyde group, an amino group, an imino group, a thiol group, an epoxy group, polysiloxane groups such as polyorganosiloxane groups, or a combinations of these.

By allowing the modification group to be contained, the aromatic vinyl-conjugated diene copolymer rubber can interact with or bond to silica at the modification group.

The modification group and the aromatic vinyl-conjugated diene copolymer rubber can be directly bonded or bonded by interposing an organic group between the modification group and the aromatic vinyl-conjugated diene copolymer rubber. The organic group is not limited.

An example of a preferable aspect is one in which the modification group is at a terminal of the aromatic vinyl-conjugated diene copolymer rubber.

### • Aromatic vinyl content

The aromatic vinyl content (e.g. styrene content) of the aromatic vinyl-conjugated diene copolymer is preferably from 20 to 45 mass%, and more preferably from 23 to 42 mass%, from the perspective of exhibiting superior effect of the present invention.

### • Vinyl bond content

Furthermore, the vinyl bond content in the conjugated diene of the aromatic vinyl-conjugated diene copolymer is preferably from 10 to 50%, and more preferably from 25 to 48%, from the perspective of exhibiting superior effect of the present invention. Note that "vinyl bond content" refers to a proportion of 1,2-vinyl bond among cis-1,4-bond, trans-1,4-bond, and 1,2-vinyl bond, which are bonding forms of conjugated dienes.

In a case where the aromatic vinyl-conjugated diene copolymer is a styrene-butadiene rubber, the microstructure thereof can be measured in accordance with JIS K 6239-1 :2017.

The production method of the aromatic vinyl-conjugated diene copolymer is not particularly limited and can be produced by a known method.

Furthermore, as the monomer used during the production of the aromatic vinyl-conjugated diene copolymer, the aromatic vinyl and the conjugated diene are not particularly limited.

Note that examples of the conjugated diene monomer include 1,3-butadiene, isoprene(2-methyl-1,3-butadiene), 2,3-dimethyl-1,3-butadiene, 2-chloro-1,3-butadiene, and 1,3-pentadiene.

Meanwhile, examples of the aromatic vinyl monomer include styrene, 2-methylstyrene, 3-methylstyrene, 4-methylstyrene, α-methylstyrene, 2,4-dimethylstyrene, 2,4-diisopropylstyrene, 4-tert-butylstyrene, divinylbenzene, tert-butoxystyrene, vinylbenzyldimethylamine, (4-vinylbenzyl)dimethylaminoethyl ether, N,N-dimethyl aminoethyl styrene, and vinyl pyridine.

### • Content of aromatic vinyl-conjugated diene copolymer

In a case where the aromatic vinyl-conjugated diene copolymer is used as the diene rubber, the content of the aromatic vinyl-conjugated diene copolymer is preferably from 50 to 100 mass%, more preferably from 55 to 95 mass%, and even more preferably from 60 to 90 mass%, with respect to the total amount of the diene rubber from the perspective of achieving excellent rigidity of a resulting tire.

### • Content of butadiene rubber in a case of combined use of butadiene rubber

Furthermore, in a case where the butadiene rubber (BR) is used in combination with the aromatic vinyl-conjugated diene copolymer, the content of the butadiene rubber (BR) is preferably from 5 to 50 mass%, more preferably from 10 to 45 mass%, and even more preferably from 20 to 40 mass%, with respect to the total amount of the diene rubber from the perspective of exhibiting superior effect of the present invention.

### Weight average molecular weight of diene rubber

The weight average molecular weight of the diene rubber (especially, the aromatic vinyl-conjugated diene copolymer) is not particularly limited and is preferably from 100000 to 1500000, and more preferably 600000 to 1300000, from the perspective of handling. Note that the weight average molecular weight (Mw) of the diene rubber is measured by gel permeation chromatography (GPC) based on calibration with polystyrene standard using tetrahydrofuran as a solvent.

### • Glass transition temperature of diene rubber

The glass transition temperature (Tg) of the diene rubber (especially, the aromatic vinyl-conjugated diene copolymer) is not particularly limited and is preferably from -70 to -10°C, and more preferably from -40 to -20°C, from the perspective of exhibiting superior effect of the present invention.

The glass transition temperature of each diene rubber is measured by using a differential scanning calorimeter (DSC) at a temperature elevation speed of 10°C/min and calculated based on the midpoint method.

### Silica

The silica contained in the composition according to an embodiment of the present invention is not particularly limited. As the silica, for example, any known silica blended in rubber compositions for applications such as a tire can be used.

Examples of the silica include wet silica, dry silica, fumed silica, and diatomaceous earth.

### CTAB adsorption specific surface area of silica

The cetyltrimethylammonium bromide (CTAB) adsorption specific surface area of the silica is preferably from 115 to 300 m²/g, more preferably from 140 to 250 m²/g, and even more preferably from 180 to 230 m²/g, from the perspective of exhibiting superior effect of the present invention.

Note that, in the present specification, the CTAB adsorption specific surface area of silica is a value of the amount of CTAB adsorbed to the surface of silica measured in accordance with JIS K6217-3:2001 "Part 3: Determination of specific surface area - CTAB adsorption method."

### Content of silica

In an embodiment of the present invention, the content of the silica is from 50 to 200 parts by mass per 100 parts by mass of the diene rubber.

The content of the silica is preferably from 70 to 150 parts by mass per 100 parts by mass of the diene rubber from the perspective of exhibiting superior effect of the present invention.

### Non-ionic surfactant

The non-ionic surfactant contained in the composition according to an embodiment of the present invention is a compound represented by Formula (1) below.

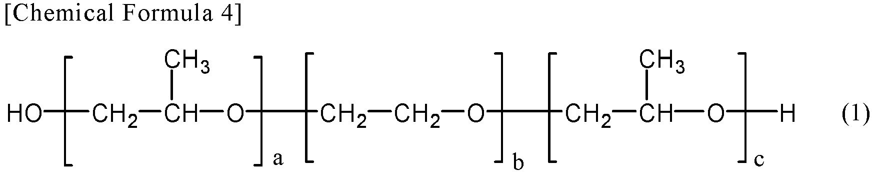

In Formula (1), b is from 5 to 45, and a + c is from 55 to 95.

By allowing the non-ionic surfactant to be contained, the composition according to an embodiment of the present invention achieves excellent processability, tensile strength at break, and fuel economy performance.

Note that the non-ionic surfactant represented by Formula (1) may be also referred to as "specific non-ionic surfactant" below.

As shown in Formula (1) above, the specific non-ionic surfactant is a straight-chain block copolymer having an hydroxy group at each of the both terminals and has, as a main chain, a block B in which a repeating unit is an oxyethylene group and the number of the repeating unit is b at center, blocks A in which a repeating unit is an oxypropylene group and the number of the repeating units is a at both sides of the block B, and a block C in which a repeating unit is an oxypropylene group and the number of the repeating unit is c.

### a, b, and c

In an embodiment of the present invention, b and a + c can be analyzed by nuclear magnetic resonance (NMR) (e.g. ¹H-NMR). As the solvent in the analysis, for example, deuterated chloroform or deuterated DMSO can be used.

Note that b described above refers to an average value of the number of repeating units of oxyethylene groups. Furthermore, a + c described above refers to an average value of the total number of the repeating units of oxypropylene groups. a and c described above may be each 1/2 of the average value of the total number of the repeating units of oxypropylene groups.

Note that, in an embodiment of the present invention, a and c described above are each independently greater than 0. a and c described above may be each independently 2 or greater.

In Formula (1), a, b, and c may be each independently an integer.

### a + c

In an embodiment of the present invention, the total of a and c (a + c) in Formula (1) is from 55 to 95.

The total number (a + c) of a and c, which are the numbers of the repeating units of oxypropylene groups in Formula (1), is preferably from 65 to 85, and more preferably from 70 to 85, from the perspectives of exhibiting superior effect of the present invention (especially, processability and/or fuel economy performance), excellent affinity with diene rubber, and excellent dispersibility of silica.

b
In an embodiment of the present invention, b in Formula (1) is from 5 to 45.

From the perspectives of exhibiting superior effect of the present invention (especially, processability and/or fuel economy performance), excellent dispersibility of silica, and excellent affinity with diene rubber and dispersibility of silica in a well-balanced manner, b, which is the number of the repeating units of oxyethylene groups in Formula (1) is preferably from 15 to 35, and more preferably from 15 to 30.

As the method of producing the non-ionic surfactant represented by Formula (1), for example, a known method can be used. Specifically, for example, using an alkali catalyst such as sodium hydroxide, in 1 mol of water, a mol of propylene oxide, b mol of ethylene oxide, and c mol of propylene oxide are reacted in this order to thereby obtain a non-ionic surfactant represented by Formula (1).

### Content of non-ionic surfactant

In an embodiment of the present invention, the content of the non-ionic surfactant is from 0.1 to 15 mass% with respect to the content of the silica.

By setting the content of the non-ionic surfactant to the range described above, the composition according to an embodiment of the present invention achieves excellent processability, fuel economy performance, and tensile strength at break.

The content of the non-ionic surfactant is preferably from 0.5 to 15 parts by mass, more preferably from 1 to 15 mass%, and even more preferably from 3 to 15 mass%, with respect to the content of the silica from the perspectives of exhibiting superior effect of the present invention, excellent affinity with diene rubber, and excellent dispersibility of silica.

### Optional component

### Glycerol partial fatty acid ester

The composition according to an embodiment of the present invention preferably contains a glycerol partial fatty acid ester together with the specific non-ionic surfactant described above. Because the glycerol partial fatty acid ester improves dispersibility of the specific non-ionic surfactant, as a result, dispersibility of silica is further enhanced, and thus superior effect of the present invention described above is achieved. Note that, in an embodiment of the present invention, a partial fatty acid ester refers to a compound in which some hydroxy groups in a polyhydric alcohol are esterified by fatty acids, and the glycerol partial fatty acid ester includes glycerol monofatty acid ester and/or glycerol difatty acid ester.

### • Fatty acid

Examples of the fatty acid of the glycerol partial fatty acid ester include monovalent carboxylic acids.

Specific examples thereof include saturated fatty acids, such as acetic acid, propionic acid, butanoic acid, pentanoic acid, isopentanoic acid, caproic acid (hexanoic acid), heptanoic acid, caprylic acid (octanoic acid), nonanoic acid, capric acid (decanoic acid), lauric acid (undecanoic acid), myristic acid (tetradecanoic acid), palmitic acid (hexadecanoic acid), stearic acid (octadecanoic acid), arachidic acid (eicosanoic acid), behenic acid (docosanoic acid), tetracosanoic acid, and hexacosanoic acid; unsaturated fatty acids, such as oleic acid, linoleic acid, linolenic acid, elaidic acid, and erucic acid; and hydroxyfatty acids, such as ricinoleic acid and hydroxystearic acid.

### • Carbon number

The fatty acid is preferably a saturated fatty acid having from 14 to 24 carbons, more preferably a saturated fatty acid having from 16 to 22 carbons, and most preferably stearic acid, from the perspective of dispersibility of silica. One type of fatty acid may be used alone, or two or more types may be used in a combination; however, when two or more types of fatty acids are used, one type of them is preferably stearic acid. Note that the number of carbons means the number of all carbons in one molecule of the saturated fatty acid.

The glycerol partial fatty acid ester preferably includes glycerol monofatty acid ester from the perspective of dispersibility of silica.

In the case where the glycerol partial fatty acid ester is a mixture of glycerol monofatty acid ester and glycerol difatty acid ester, the content of the glycerol monofatty acid ester with respect to the total amount of the glycerol partial fatty acid ester is preferably at least 50 mass%.

### • Specific non-ionic surfactant/glycerol partial fatty acid ester

In the case where the composition according to an embodiment of the present invention further contains a glycerol partial fatty acid ester, from the perspective of exhibiting superior effect of the present invention, excellent affinity with diene rubber, and excellent dispersibility of silica, the ratio of the content of the specific non-ionic surfactant to the content of the glycerol partial fatty acid ester (specific non-ionic surfactant/glycerol partial fatty acid ester), in terms of mass ratio, is preferably from 0.01 to 10, more preferably from 0.1 to 1.0, and even more preferably from 0.2 to 0.5.

### • Content of glycerol partial fatty acid ester

Furthermore, in the case where the composition according to an embodiment of the present invention further contains a glycerol partial fatty acid ester, the content of the glycerol partial fatty acid ester is preferably from 0.1 to 10 parts by mass, and more preferably from 1 to 5 parts by mass, per 100 parts by mass of the diene rubber described above from the same reason as described above.

### • Total content of specific non-ionic surfactant and glycerol partial fatty acid ester

Furthermore, in the case where the composition according to an embodiment of the present invention further contains a glycerol partial fatty acid ester, the total content of the specific non-ionic surfactant and the glycerol partial fatty acid ester described above is preferably from 0.2 to 10 parts by mass per 100 parts by mass of the diene rubber described above from the same reason as described above. One type of the glycerol partial fatty acid ester may be used alone, or two or more types of the glycerol partial fatty acid esters may be used in a combination.

### Fatty acid metal salt

The composition according to an embodiment of the present invention preferably contains a fatty acid metal salt together with the specific non-ionic surfactant described above. Because the fatty acid metal salt improves dispersibility of the specific non-ionic surfactant, dispersibility of silica is further enhanced, and thus superior effect of the present invention described above is achieved.

The fatty acid metal salt is a salt of a fatty acid and a metal.

Examples of the fatty acid of the fatty acid metal salt include those exemplified for the fatty acid for the glycerol partial fatty acid ester described above.

The fatty acid is preferably a saturated fatty acid having from 8 to 24 carbons, more preferably a saturated fatty acid having from 10 to 22 carbons, even more preferably a saturated fatty acid having from 16 to 22 carbons, and most preferably stearic acid, from the perspective of dispersibility of silica. One type of the fatty acid may be used alone, or two or more types of the fatty acids may be used in a combination. Note that the number of carbons means the number of all carbons in one molecule of the saturated fatty acid.

### • Metal of fatty acid metal salt

Examples of the metal of the fatty acid metal salt include alkali metals, alkaline earth metals, transition metals (metals of Groups 3 to 11), aluminum, germanium, tin, and antimony.

Among these, from the perspective of dispersibility of silica, the metal of the fatty acid metal salt is preferably an alkali metal (such as lithium, potassium, and sodium) or an alkaline earth metal (such as beryllium, magnesium, calcium, strontium, and barium), more preferably an alkaline earth metal, and even more preferably magnesium.

Specific examples of the preferred fatty acid metal salt include potassium stearate, zinc stearate, magnesium stearate, magnesium oleate, magnesium palmitate, magnesium myristate, magnesium laurate, magnesium linoleate, and magnesium behenate.

### • Specific non-ionic surfactant/fatty acid metal salt

In the case where the composition according to an embodiment of the present invention further contains a fatty acid metal salt, from the perspective of exhibiting superior effect of the present invention, excellent affinity with diene rubber, and excellent dispersibility of silica, the ratio of the content of the specific non-ionic surfactant to the content of the fatty acid metal salt (specific non-ionic surfactant/fatty acid metal salt), in terms of mass ratio, is preferably from 0.01 to 10, more preferably from 0.1 to 1.0, and even more preferably from 0.2 to 0.5.

### • Content of fatty acid metal salt

Furthermore, in the case where the composition according to an embodiment of the present invention further contains a fatty acid metal salt, the content of the fatty acid metal salt is preferably from 0.1 to 10 parts by mass, and more preferably from 1 to 5 parts by mass, per 100 parts by mass of the diene rubber described above from the same reason as described above.

### • Total content of specific non-ionic surfactant and fatty acid metal salt

Furthermore, in the case where the composition according to an embodiment of the present invention further contains a fatty acid metal salt, the total content of the specific non-ionic surfactant and the fatty acid metal salt described above is preferably from 0.2 to 10 parts by mass per 100 parts by mass of the diene rubber described above from the same reason as described above. One type of the fatty acid metal salt may be used alone, or two or more types of the fatty acid metal salts may be used in a combination.

From the perspective of further exhibiting superior effect of the present invention described above, the composition according to an embodiment of the present invention preferably contains both glycerin partial acid ester and fatty acid metal salt together with the specific non-ionic surfactant described above.

### Other additives

The composition according to an embodiment of the present invention may further contain additives as necessary within a scope that does not impair the effect or purpose thereof.

Examples of the additives include various additives that are typically used in rubber compositions, such as fillers other than the silica (e.g. carbon black), zinc oxide (flowers of zinc), stearic acid, anti-aging agents, silane coupling agents, processing aids, oils (e.g. process oils, aroma oils), liquid polymers, terpene resins, thermosetting resins, vulcanizing agents (e.g. sulfur), and vulcanization accelerators.

### Method of producing rubber composition for tire

The method of producing the composition according to an embodiment of the present invention is not particularly limited, and specific examples thereof include a method whereby each of the above-mentioned components is kneaded using a known method and device (e.g. Banbury mixer, kneader, and roll). When the composition according to an embodiment of the present invention contains a sulfur or a vulcanization accelerator, the components other than the sulfur and the vulcanization accelerator are preferably blended first at a high temperature (preferably from 140 to 160°C) and then cooled before the sulfur or the vulcanization accelerator is blended.

In addition, the composition according to an embodiment of the present invention can be vulcanized or crosslinked under known vulcanizing or crosslinking conditions.

### Application

The composition according to an embodiment of the present invention can be used as a rubber composition for a tire.

### Tire

A tire can be formed by using the composition according to an embodiment of the present invention. In a tire, constituent members to which the composition according to an embodiment of the present invention is applied are not particularly limited. Among these, a tire tread is preferably formed by using the composition according to an embodiment of the present invention.

FIG. 1 is a schematic partial cross-sectional view of a tire formed by using the composition according to an embodiment of the present invention. The tire formed by using the composition according to an embodiment of the present invention is not limited to the attached drawing.

In FIG. 1, the reference sign 1 denotes a bead portion, the reference sign 2 denotes a sidewall portion, and the reference sign 3 denotes a tire tread portion.

Furthermore, a carcass layer 4 in which a fiber cord is embedded is mounted between a pair of left and right bead portions 1, and an end portion of the carcass layer 4 is folded outward from an inside of the tire around the bead core 5 and the bead filler 6 and rolled up.

In the tire tread portion 3, a belt layer 7 is provided along the entire periphery of the tire on the outer side of the carcass layer 4.

In the bead portion 1, a rim cushion 8 is disposed in a portion in contact with a rim.

The tire tread portion 3 is preferably formed from the composition according to an embodiment of the present invention described above.

The tire according to an embodiment of the present invention can be produced, for example, in accordance with a known method. In addition to ordinary air or air with an adjusted oxygen partial pressure, for example, inert gases such as nitrogen, argon, and helium can be used as the gas with which the tire is filled.

### Examples

An embodiment of the present invention will be described in further detail below by way of examples. However, an embodiment of the present invention is not limited to these examples.

### Production of rubber composition for tire

The components shown in Table 1 below were blended in the proportions (part by mass) shown in the same table below. Note that, in Table 1, the amount of the diene rubber 1 is a net amount (unit: part by mass) of the diene rubber (SBR).

Specifically, the components shown in the same table except for sulfur and the vulcanization accelerators were first mixed in a 1.7-L sealed Banbury mixer for 5 minutes. The temperature at the time of discharging was 152°C, then the temperature was lowered to room temperature, and thus a master batch was obtained. Furthermore, sulfur and vulcanization accelerators were added to the obtained master batch, and these were mixed by using the Banbury mixer for 3 minutes and discharged at 110°C, and thus a rubber composition for a tire was obtained.

### Production of vulcanized rubber sheet

Each of the rubber compositions for tires (unvulcanized) obtained as described above was subjected to press vulcanization at 160°C for 20 minutes in a mold, and thus a vulcanized rubber sheet (length 15 cm × width 15 cm × thickness 0.2 cm) was prepared.

### Evaluation

The following evaluations were performed for each of the rubber compositions for tires or vulcanized rubber sheets obtained as described above.

### Processability

### • Measurement of Mooney viscosity

For each of the rubber compositions for tires obtained as described above, according to JIS K 6300-1: 2013, the Mooney viscosity (ML₁₊₄) at 100°C was measured.

### • Evaluation result of Mooney viscosity

The evaluation result of the Mooney viscosity is expressed as an index value with the value of the Mooney viscosity of the Reference Example being assigned the index value of 100, and shown in a row of "processability" in Table 1.

### • Evaluation criteria for processability

A smaller index value of the Mooney viscosity indicates a lower viscosity and, thus, superior processability.

### Tensile strength at break

### • Tensile test

Using each of the vulcanized rubber sheets produced as described above, a No. 3 dumbbell-shaped test piece was punched out in accordance with JIS K 6251:2010. Using each of the test pieces, tensile test was performed at room temperature at a tensile speed of 500 mm/min, and tensile strength at break was measured for each test piece.

### • Evaluation result of tensile strength at break

The result of the obtained tensile strength at break is expressed as an index value with the value of the Standard Example being assigned the index value of 100, and shown in a row of "tensile strength at break" in Table 1.

### • Evaluation criteria for tensile strength at break

A larger index value of the "tensile strength at break" indicates a higher tensile strength at break. A higher tensile strength at break is preferred because excellent wear resistance is achieved when a tire is formed.

### Fuel economy performance

### Measurement of tan δ (60°C)

Using a viscoelastic spectrometer (available from Toyo Seiki Seisakusho, Ltd.) in accordance with JIS K 6394:2007, tan δ (60°C) of each of the vulcanized rubber sheets produced as described above was measured at an elongation deformation strain of 10% ± 2%, a vibration frequency of 20 Hz, and a temperature of 60°C.

### • Evaluation result of tan δ (60°C)

The evaluation result of the tan δ (60°C) is expressed as an index value with the value of the tan δ (60°C) of the Reference Example being assigned the index value of 100, and shown in a row of "fuel economy performance" in Table 1.

### • Evaluation criteria for tan δ (60°C)

A smaller index value of the tan δ (60°C) indicates a smaller tan δ (60°C) and superior fuel economy performance.

**[Table 1-1]**

| Table 1 | Standard Example | Example 1 | Example 2 | Example 3 | Example 4 | Example 5 | Example 6 |
|---|---|---|---|---|---|---|---|
| Diene rubber 1 | 80.0 | 80.0 | 80.0 | 80.0 | 80.0 | 80.0 | 80.0 |
| Diene rubber 2 | 20.0 | 20.0 | 20.0 | 20.0 | 20.0 | 20.0 | 20.0 |
| Silica | 70.0 | 70.0 | 70.0 | 70.0 | 70.0 | 70.0 | 70.0 |
| Carbon black | 5.0 | 5.0 | 5.0 | 5.0 | 5.0 | 5.0 | 5.0 |
| Stearic acid | 2.0 | 2.0 | 2.0 | 2.0 | 2.0 | 2.0 | 2.0 |
| Zinc oxide | 2.0 | 2.0 | 2.0 | 2.0 | 2.0 | 2.0 | 2.0 |
| Anti-aging agent | 1.0 | 1.0 | 1.0 | 1.0 | 1.0 | 1.0 | 1.0 |
| Silane coupling agent | 7.2 | 7.2 | 7.2 | 7.2 | 7.2 | 7.2 | 7.2 |
| Oil (TDAE) | 6.3 | 6.3 | 6.3 | 6.3 | 6.3 | 6.3 | 6.3 |
| Non-ionic surfactant 1 | | 3.0 | | 0.6 | 0.6 | 0.6 | 0.6 |
| Non-ionic surfactant 2 | | | 3.0 | | | | |
| Non-ionic surfactant 3 (Inverted structure) (Comparative) | | | | | | | |
| Non-ionic surfactant 4 (Random) (Comparative) | | | | | | | |
| Non-ionic surfactant 5 (PPO only) (Comparative) | | | | | | | |
| Vulcanization accelerator 1 (CZ) | 1.7 | 1.7 | 1.7 | 1.7 | 1.7 | 1.7 | 1.7 |
| Vulcanization accelerator 2 (DPG) | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 |
| Glycerol partial fatty acid ester | | | | 2.4 | | | |
| Fatty acid metal salt 1 (K stearate) | | | | | 2.4 | | |
| Fatty acid metal salt 2 (Mg stearate) | | | | | | 2.4 | |
| Fatty acid metal salt 3 (Mg behenate) | | | | | | | 2.4 |
| Non-ionic surfactant/silica (mass%) | 0.0 | 4.3 | 4.3 | 0.9 | 0.9 | 0.9 | 0.9 |
| Processability (Mooney viscosity, index value) | 100 | 82 | 84 | 79 | 76 | 73 | 68 |
| Tensile strength at break (index value) | 100 | 100 | 100 | 105 | 107 | 107 | 108 |
| Fuel economy performance (tan δ (60°C), index value) | 100 | 93 | 94 | 88 | 84 | 86 | 85 |

**[Table 1-2]**

| Table 1 | Comparative Example 1 | Comparative Example 2 | Comparative Example 3 | Comparative Example 4 | Comparative Example 5 | Comparative Example 6 |
|---|---|---|---|---|---|---|
| Diene rubber 1 | 80.0 | 80.0 | 80.0 | 80.0 | 80.0 | 80.0 |
| Diene rubber 2 | 20.0 | 20.0 | 20.0 | 20.0 | 20.0 | 20.0 |
| Silica | 70.0 | 70.0 | 70.0 | 30.0 | 250.0 | 70.0 |
| Carbon black | 5.0 | 5.0 | 5.0 | 5.0 | 5.0 | 5.0 |
| Stearic acid | 2.0 | 2.0 | 2.0 | 2.0 | 2.0 | 2.0 |
| Zinc oxide | 2.0 | 2.0 | 2.0 | 2.0 | 2.0 | 2.0 |
| Anti-aging agent | 1.0 | 1.0 | 1.0 | 1.0 | 1.0 | 1.0 |
| Silane coupling agent | 7.2 | 7.2 | 7.2 | 7.2 | 7.2 | 7.2 |
| Oil (TDAE) | 6.3 | 6.3 | 6.3 | 6.3 | 6.3 | 6.3 |
| Non-ionic surfactant 1 | | | | 1.5 | 25.0 | 15.0 |
| Non-ionic surfactant 2 | | | | | | |
| Non-ionic surfactant 3 (Inverted structure) (Comparative) | 3.0 | | | | | |
| Non-ionic surfactant 4 (Random) (Comparative) | | 3.0 | | | | |
| Non-ionic surfactant 5 (PPO only) (Comparative) | | | 3.0 | | | |
| Vulcanization accelerator 1 (CZ) | 1.7 | 1.7 | 1.7 | 1.7 | 1.7 | 1.7 |
| Vulcanization accelerator 2 (DPG) | 2.0 | 2.0 | 2.0 | 2.0 | 2.0 | 2.0 |
| Sulfur | 1.5 | 1.5 | 1.5 | 1.5 | 1.5 | 1.5 |
| Glycerol partial fatty acid ester | | | | | | |
| Fatty acid metal salt 1 (K stearate) | | | | | | |
| Fatty acid metal salt 2 (Mg stearate) | | | | | | |
| Fatty acid metal salt 3 (Mg behenate) | | | | | | |
| Non-ionic surfactant/silica (mass%) | 4.3 | 4.3 | 4.3 | 5.0 | 10.0 | 21.4 |
| Processability (Mooney viscosity, index value) | 88 | 86 | 92 | 80 | 96 | 82 |
| Tensile strength at break (index value) | 100 | 96 | 95 | 96 | 95 | 98 |
| Fuel economy performance (tan δ (60°C), index value) | 96 | 98 | 99 | 90 | 103 | 93 |

Details of each component indicated in Table 1 are as follows.
- Diene rubber 1: Styrene-butadiene rubber produced by solution polymerization and having a hydroxy group at a terminal. Tufdene E580 (oil extended product). 37.5 parts by mass of extender oil was contained with respect to a net amount of 100 parts by mass of SBR. Styrene content: 37 mass%, vinyl bond content: 42%, Tg: -27°C, weight average molecular weight: 1260000, available from Asahi Kasei Corporation.
- Diene rubber 2: Butadiene rubber. Nipol BR1220, available from Zeon Corporation.

- Silica: Zeosil 1165MP, available from Solvay. CTAB adsorption specific surface area: 152 m²/g.
- Carbon black: SEAST KH N339 (N₂SA 93 m²/g, available from Tokai Carbon Co., Ltd.)

- Stearic acid: Industrial stearic acid N, available from Chiba Fatty Acid Co., Ltd.
- Zinc oxide: Zinc Oxide III, available from Seido Chemical Industry Co., Ltd.
- Anti-aging agent: 6PPD (available from Flexsys)
- Silane coupling agent: Si69 (bis(3-triethoxysilylpropyl) tetrasulfide, available from Evonik Degussa Corporation
- Oil (TDAE): Extract 4S, available from Shell Lubricants Japan K.K.

- Non-ionic surfactant 1: Compound represented by Formula (1) above, wherein b is 20, a + c is 80, and a and c are each 2 or greater (non-ionic surfactant).

- Non-ionic surfactant 2: Compound represented by Formula (1) above, where b is 40, a + c is 60, and a and c are each 2 or greater (non-ionic surfactant).

- Non-ionic surfactant 3 (inverted structure) (comparative): Compound represented by Formula (I) below.

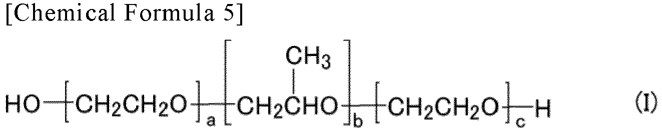

In Formula (I), b is 80, and a + c is 20.
- Non-ionic surfactant 4 (random) (comparative): trade name: Adeka Polyether PR-3007, available from Adeka Corporation. A straight-chain polyoxyethylene oxypropylene random copolymer having hydroxy groups at both terminals.
- Non-ionic surfactant 5 (PPO only) (comparative): trade name: Adeka Polyether P-2000, available from Adeka Corporation. A straight-chain polyoxypropylene glycol having hydroxy groups at both terminals.

- Vulcanization accelerator 1 (CZ): NOCCELER CZ-G, available from Ouchi Shinko Chemical Industrial Co., Ltd.
- Vulcanization accelerator 2 (DPG): NOCCELER D, available from Ouchi Shinko Chemical Industrial Co., Ltd.
- Sulfur: Oil treatment sulfur, available from Hosoi Chemical Industry Co., Ltd.

- Glycerol partial fatty acid ester: Mixture of glycerol monostearate/glycerol distearate = 2/1 (mass ratio).

- Fatty acid metal salt 1: Potassium stearate (potassium content: 12.5 mass%).
- Fatty acid metal salt 2: Magnesium stearate (magnesium content: 4.5 mass%).
- Fatty acid metal salt 3: Magnesium behenate (magnesium content: 3.4 mass%).

As can be seen from the results shown in Table 1, the compositions according to embodiments of the present invention exhibited excellent processability, tensile strength at break, and fuel economy performance.

On the other hand, Comparative Examples 1 to 3, which contained no specific non-ionic surfactant but contained a different non-ionic surfactant in place of the specific non-ionic surfactant, exhibited insufficient processability and fuel economy performance. Furthermore, Comparative Examples 2 and 3 exhibited insufficient processability, tensile strength at break, and fuel economy performance.

Comparative Example 4, in which the content of silica was less than the predetermined range, exhibited insufficient tensile strength at break.

Comparative Example 5, in which the content of silica was greater than the predetermined range, exhibited insufficient processability, tensile strength at break, and fuel economy performance.

Comparative Example 6, in which the specific non-ionic surfactant was contained but the content thereof was greater than 15 mass% with respect to the content of silica, exhibited insufficient tensile strength at break.

### Reference Signs List

1 Bead portion
2 Sidewall portion
3 Tire tread portion
4 Carcass layer
5 Bead core
6 Bead filler
7 Belt layer
8 Rim cushion

## Claims

1. A rubber composition for a tire, the rubber composition comprising a diene rubber, silica, and a non-ionic surfactant represented by Formula (1) below,
a content of the silica being from 50 to 200 parts by mass per 100 parts by mass of the diene rubber, and
a content of the non-ionic surfactant being from 0.1 to 15 mass% with respect to the content of the silica: 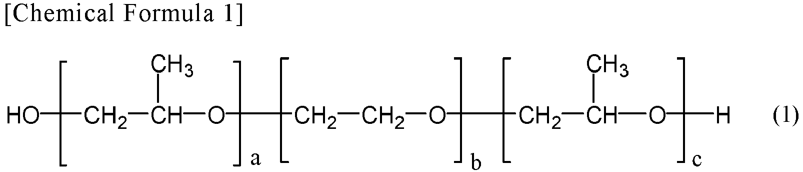
where, b is from 5 to 45, and a + c is from 55 to 95.

2. The rubber composition for a tire according to claim 1, wherein a CTAB adsorption specific surface area of the silica is from 115 to 300 m²/g.

## Patentansprüche

1. Kautschukzusammensetzung für einen Reifen, die Kautschukzusammensetzung umfassend einen Dienkautschuk, Silica und ein nichtionisches Tensid, das durch Formel (1) unten dargestellt ist,
wobei ein Gehalt des Silicas von 50 bis 200 Massenteilen pro 100 Massenteile des Dienkautschuks beträgt, und
ein Gehalt des nichtionischen Tensids von 0,1 bis 15 Masse-% hinsichtlich des Gehalts des Silicas beträgt: 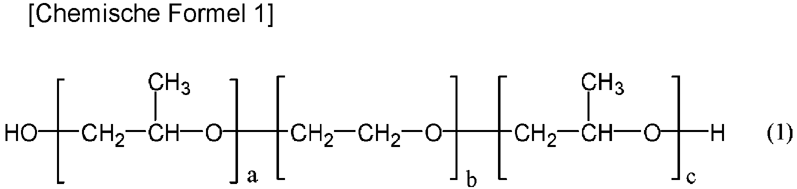
wobei b von 5 bis 45 ist und a + c von 55 bis 95 ist.

2. Kautschukzusammensetzung für einen Reifen gemäß Anspruch 1, wobei ein CTAB-adsorptionsspezifischer-Oberflächenbereich des Silicas von 115 bis 300 m²/g beträgt.

## Revendications

1. Composition de caoutchouc pour un pneumatique, la composition de caoutchouc comprenant un caoutchouc diénique, de la silice et un agent tensioactif non ionique représenté par la Formule (1) ci-dessous,
une teneur de la silice étant comprise entre 50 et 200 parties en masse pour 100 parties en masse du caoutchouc diénique, et
une teneur de l'agent tensioactif non ionique étant comprise entre 0,1 à 15 % en masse par rapport à la teneur de la silice : 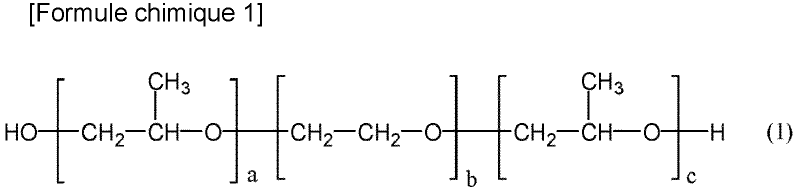
b étant compris entre 5 et 45, et a + c étant compris entre 55 à 95.

2. Composition de caoutchouc pour un pneumatique selon la revendication 1, dans laquelle une aire de surface spécifique d'adsorption CTAB de la silice est comprise entre 115 et 300 m²/g.
